(19) **Europäisches Patentamt / European Patent Office / Office européen des brevets**

(11) **EP 4 491 591 A1**

(12) **EUROPEAN PATENT APPLICATION**
published in accordance with Art. 153(4) EPC

(43) Date of publication:
15.01.2025 Bulletin 2025/03

(21) Application number: 23766408.1

(22) Date of filing: 09.02.2023

(51) International Patent Classification (IPC):
$C03B\ 37/005^{(2006.01)}$  $C01B\ 33/12^{(2006.01)}$
$C03C\ 17/28^{(2006.01)}$  $C03C\ 17/32^{(2006.01)}$
$C08K\ 3/013^{(2018.01)}$  $C08K\ 3/34^{(2006.01)}$
$C08K\ 7/00^{(2006.01)}$  $C08L\ 101/00^{(2006.01)}$

(52) Cooperative Patent Classification (CPC):
C01B 33/12; C03B 37/005; C03C 17/28;
C03C 17/32; C08K 3/013; C08K 3/34; C08K 7/00;
C08L 101/00

(86) International application number:
PCT/JP2023/004467

(87) International publication number:
WO 2023/171228 (14.09.2023 Gazette 2023/37)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 09.03.2022 JP 2022036054

(71) Applicant: NIPPON SHEET GLASS COMPANY,
LIMITED
Tokyo 108-6321 (JP)

(72) Inventors:
• KATO Shinichi
  Tokyo 108-6321 (JP)
• WAKAMIYA Takashi
  Tokyo 108-6321 (JP)
• MIKAMI Shinji
  Tokyo 108-6321 (JP)

(74) Representative: Cabinet Beau de Loménie
158, rue de l'Université
75340 Paris Cedex 07 (FR)

(54) **FLAKE-LIKE SUBSTRATE AND RESIN COMPOSITION**

(57) The flake-like substrate has an average particle size of 0.1 to 11 μm and an average thickness of 0.1 to 1.0 μm and has a particle size distribution in which D99 ≤ 35 μm, D100 ≤ 45 μm, 3 < D90/D10, and (D90 × D99 × D100)/D50 ≤ 3200 are satisfied, where D10 is a particle size at which a cumulative volume fraction from a smaller-particle side reaches 10%, D50 is a particle size at which the cumulative volume fraction from the smaller-particle side reaches 50%, D90 is a particle size at which the cumulative volume fraction from the smaller-particle side reaches 90%, D99 is a particle size at which the cumulative volume fraction from the smaller-particle side reaches 99%, and D100 is a particle size at which the cumulative volume fraction from the smaller-particle side reaches 100%.

FIG. 1

**Description**

TECHNICAL FIELD

The present invention relates to a flake-like substrate and a resin composition.

BACKGROUND ART

It is generally known that fibers such as glass fibers and carbon fibers, glass beads, and flake-like substrates such as glass flakes, mica, and talc are used as a filler to be blended in a matrix resin of a resin molded article in order to achieve, for example, reduction in warping and deformation and/or improvement in mechanical strength of the resin molded article.

For example, Patent Literature 1 proposes glass flakes having an average particle size of 0.1 to 15 $\mu$m and an average thickness of 0.1 to 2 $\mu$m, adapted to attain particle size reduction by limiting, in the particle size distribution, a particle size D99 at which the cumulative volume fraction from the smaller-particle side reaches 99% to 45 $\mu$m or less and a maximum particle size (D100) to 62 $\mu$m or less.

CITATION LIST

Patent Literature

Patent Literature 1: WO 2018/221313 A1

SUMMARY OF INVENTION

Technical Problem

When the glass flakes of Patent Literature 1 are used as a filler for reinforcing a resin molded article, they can improve the impact resistant of the resulting resin molded article. However, the inventors of the present invention found through studies that resin molded articles obtained using the flake-like substrate adapted to limit D99 to 45 $\mu$m or less and D100 to 62 $\mu$m or less still have room for improvement in terms of impact resistance.

One object of the present invention is to provide an improved flake-like substrate suitable for use as a filler for reinforcing resin molded articles. Another object of the present invention is to improve the impact resistance of a resin molded article reinforced by a flake-like substrate.

Solution to Problem

Viewed from one aspect, the present invention provides a flake-like substrate having an average particle size of 0.1 to 11 $\mu$m and an average thickness of 0.1 to 1.0 $\mu$m, wherein

the flake-like substrate has a particle size distribution in which the following is satisfied:

$$D99 \leq 35 \ \mu m;$$

$$D100 \leq 45 \ \mu m;$$

$$3 < D90/D10;$$

and

$$(D90 \times D99 \times D100)/D50 \leq 3200,$$

where D10 is a particle size at which a cumulative volume fraction from a smaller-particle side reaches 10%, D50 is a particle size at which the cumulative volume fraction from the smaller-particle side reaches 50%, D90 is a particle size at which the cumulative volume fraction from the smaller-particle side reaches 90%, D99 is a particle size at which the cumulative volume fraction from the smaller-particle side reaches 99%, and D100 is a particle size at which the cumulative volume fraction from the smaller-particle side reaches 100%, and

(D90 × D99 × D100)/D50 is calculated using μm as the unit of D50, D90, D99 and D100.

Viewed from another aspect, the present invention provides a resin composition containing:

a flake-like substrate; and
a matrix resin,
wherein the flake-like substrate contained in the resin composition has an average particle size of 0.1 to 11 μm and an average thickness of 0.1 to 1.0 μm, and has a particle size distribution in which the following is satisfied:

$$D99 \leq 35\ \mu m;$$

$$D100 \leq 45\ \mu m;$$

$$3 < D90/D10;$$

and

$$(D90 \times D99 \times D100)/D50 \leq 3200,$$

where D10 is a particle size at which a cumulative volume fraction from a smaller-particle side reaches 10%, D50 is a particle size at which the cumulative volume fraction from the smaller-particle side reaches 50%, D90 is a particle size at which the cumulative volume fraction from the smaller-particle side reaches 90%, D99 is a particle size at which the cumulative volume fraction from the smaller-particle side reaches 99%, and D100 is a particle size at which the cumulative volume fraction from the smaller-particle side reaches 100%, and
(D90 × D99 × D100)/D50 is calculated using μm as the unit of D50, D90, D99 and D100.

Advantageous Effects of Invention

The present invention provides a flake-like substrate suitable for use as a filler for reinforcing resin molded articles, and can improve the impact resistance of resin molded articles reinforced by the flake-like substrate.

BRIEF DESCRIPTION OF DRAWINGS

FIG. 1 is a schematic diagram illustrating an exemplary apparatus for producing glass flakes.
FIG. 2 is a schematic diagram illustrating another exemplary apparatus for producing glass flakes.

DESCRIPTION OF EMBODIMENTS

Embodiments of the flake-like substrate and resin composition according to the present invention will be described below. It is to be noted that the following description is not intended to limit the present invention to specific embodiments.

Background Leading to the Present Invention

The inventors of the present invention found that limiting the upper limits of D99 and D100 as taught in Patent Literature 1 not always sufficiently improves the impact strength of resin molded articles. The inventors conducted further studies to find the cause thereof, and discovered that not only D values in a region where the cumulative volume is 99% or more (D99 and D100) but also D values in a region near D90 adjacent to this region affect the impact resistance. In addition, surprisingly, as long as the parameters whose upper limits should be limited (D90 to D100) are limited to similar extents, a relatively large D50 value may be suitable for improving the impact strength. With consideration given to the above, it is desirable to limit the value calculated as per (D90 × D99 × D100)/D50 to a predetermined value or less. However, it is not necessary to excessively limit the spread of the particle size distribution to keep this value low. This is because limiting the particle size distribution more than is necessary considerably reduces the manufacturing efficiency of the flake-like substrate. From this viewpoint, D90/D10 may exceed the predetermined value. The present invention was completed in light of the foregoing, and embodiments of the present invention will be described below.

Flake-like Substrate

A flake-like substrate of the present embodiment has an average particle size of 0.1 to 11 $\mu$m and an average thickness of 0.1 to 1.0 $\mu$m. Further, the flake-like substrate of the present embodiment has a particle size distribution in which D99 $\leq$ 35 $\mu$m, D100 $\leq$ 45 $\mu$m, 3 < D90/D10, and (D90 $\times$ D99 $\times$ D100)/D50 $\leq$ 3200 are satisfied, where D10 is a particle size at which a cumulative volume fraction from a smaller-particle side reaches 10%, D50 is a particle size at which the cumulative volume fraction from the smaller-particle side reaches 50%, D90 is a particle size at which the cumulative volume fraction from the smaller-particle side reaches 90%, D99 is a particle size at which the cumulative volume fraction from the smaller-particle side reaches 99%, and D100 is a particle size at which the cumulative volume fraction from the smaller-particle side reaches 100%. In the last formula, the units of D50, D90, D99, and D100 are $\mu$m. D10, D50, D90, D99, and D100 can be determined based on the volume standard using a laser diffraction/scattering method.

The flake-like substrate with the above-described characteristics is suitable for improving the impact resistance of a resin molded article when used as a filler for reinforcing the resin molded article. In addition, it can also improve the appearance and surface smoothness of the resulting resin molded article.

The flake-like substrate of the present embodiment may be an inorganic substrate formed of an inorganic material, or may be an organic substrate formed of an organic material. The inorganic substrate may be, for example, a substrate formed of glass, mica, talc, wollastonite, kaolin, calcium carbonate, montmorillonite, silica, clay, bentonite, hydrotalcite, or a carbon material such as graphite. The organic substrate may be, for example, a substrate formed of aramid, polyamide, polyester, polyethylene, polypropylene, an acrylic material, or rayon. Other examples of the organic substrate include those obtained by forming cotton, linen, or silk into flakes.

The flake-like substrate of the present embodiment may be formed of at least one selected from the group consisting of glass, mica, and talc. The flake-like substrate of the present embodiment may be glass flakes.

As described above, the flake-like substrate of the present embodiment has an average particle size in the range of 0.1 to 11 $\mu$m. The average particle size may be 0.5 $\mu$m or more, 1.0 $\mu$m or more, 2.2 $\mu$m or more, or 2.4 $\mu$m or more. The average particle size may be, for example, in the range of 2.4 to 11 $\mu$m. The average particle size may be 5 $\mu$m or less. In the present specification, the average particle size of the flake-like substrate refers to a particle size (D50) at which the cumulative volume fraction from the smaller-particle side reaches 50% in the particle size distribution of the flake-like substrate measured by a laser diffraction/scattering method. According to the present embodiment, a flake-like substrate suitable for improving the impact strength of resin molded articles can be obtained without limiting the overall particle sizes to reduce the average particle size (D50). In general, the flake-like substrate with a large average particle size is advantageous in terms of less scattering when handling the flake-like substrate.

As described above, the flake-like substrate of the present embodiment has an average thickness in the range of 0.1 to 1.0 $\mu$m. The average thickness may be 0.2 $\mu$m or more or 0.3 $\mu$m or more. The average thickness may be 0.9 $\mu$m or less, 0.8 $\mu$m or less, or 0.7 $\mu$m or less. In the present specification, the average thickness of a flake-like substrate refers to a value calculated by measuring the thickness of at least 100 flakes included in the flake-like substrate using a scanning electron microscope (SEM) and then dividing the sum of the measured values by the number of flakes used for the measurement.

D90/D10 can be used as an index indicating the range of particle size distribution of the flake-like substrate. The larger the value of D90/D10, the broader the particle size distribution, and the smaller the value of D90/D10, the narrower the particle size distribution. (D90 $\times$ D99 $\times$ D100)/D50 is an index indicating the content of coarse particles in the particle size distribution. The larger the value of (D90 $\times$ D99 $\times$ D100)/D50, the higher the content of coarse particles, and the smaller the value of (D90 $\times$ D99 $\times$ D100)/D50, the lower the content of coarse particles.

In general, a flake-like substrate for use as, for example, a glitter pigment preferably has a narrow particle size distribution (i.e., the contents of fine particles and coarse particles are low). For example, Japanese Patent No. 4652445 discloses scale-like particles (glass flakes) applicable to a glitter pigment and having a D90/D10 value of 2.0 or more and 3.0 or less. In contrast, a flake-like substrate for use as a filler for reinforcing resin molded articles need not have a narrow particle size distribution. The flake-like substrate of the present embodiment satisfies (D90 $\times$ D99 $\times$ D100)/D50 $\leq$ 3200 and 3 < D90/D10 at the same time, and this means that the content of coarse particles is set very low whereas the content of fine particles is not strictly controlled. Allowing a broader particle size distribution saves the labor required for classification. In particular, since operations for strictly limiting the content of fine particles considerably reduces the manufacturing efficiency, it is highly advantageous to eliminate the need for these operations. Besides, it is also expected that the presence of a certain amount of fine particles improves the fillability and flowability of resin compositions during injection molding, as compared with the case where the content of fine particles is strictly limited.

(D90 $\times$ D99 $\times$ D100)/D50 of the flake-like substrate of the present embodiment is preferably 2800 or less ((D90 $\times$ D99 $\times$ D100)/D50 $\leq$ 2800) and particularly preferably 2700 or less. The lower limit of (D90 $\times$ D99 $\times$ D100)/D50 is preferably 300 or more (300 $\leq$ D90 $\times$ D99 $\times$ D100/D50). In pulverization of a flake-like substrate, the lower particle size limit of the resulting particles is determined depending on the employed pulverization method and conditions, and setting the lower limit of (D90 × D99 × D100)/D50 to 300 or more means that the pulverization is terminated when the pulverization has proceeded to a moderate level at which a good manufacturing efficiency is maintained, in other words, the content of coarse particles is not excessively reduced. This reduces the labor required for excessively reducing the coarse particles during pulverization, i.e., the time required for pulverization, resulting in an improved manufacturing efficiency. Besides, the presence of a small amount of coarse particles reduces the dustability of the flake-like substrate as compared with the case where there are almost no coarse particles, and the handleability of the flake-like substrate is thus improved. The lower limit of (D90 × D99 × D100)/D50 of the flake-like substrate of the present embodiment may be 700 or more (700 ≤ (D90 × D99 × D100)/50).

The upper limit of D90/D10 of the flake-like substrate of the present embodiment is not limited to a particular value, and may be, for example, 13 or less (D90/D10 ≤ 13). The upper limit of D90/D10 may be 11 or less (D90/D10 ≤ 11).

D10 of the flake-like substrate of the present embodiment may be 10 $\mu$m or less (D10 ≤ 10 $\mu$m) or 6.0 $\mu$m or less (D10 ≤ 6.0 $\mu$m). D10 is preferably 2.0 $\mu$m or less (D10 ≤ 2.0 $\mu$m). The lower limit of D10 is not limited to a particular value, and may be, for example, 0.5 $\mu$m or more (0.5 $\mu$m ≤ D10).

Suitable values of D50 of the flake-like substrate of the present embodiment are described above as suitable values of the average particle size.

D90 of the flake-like substrate of the present embodiment may be 25 $\mu$m or less (D90 ≤ 25 $\mu$m) or 20 $\mu$m or less (D90 ≤ 20 $\mu$m). D90 is preferably 11 $\mu$m or less (D90 ≤ 11 $\mu$m). The lower limit of D90 is not limited to a particular value, and may be, for example, 5.0 $\mu$m or more (5.0 $\mu$m ≤ D90).

D99 of the flake-like substrate of the present embodiment is preferably 21 $\mu$m or less (D99 ≤ 21 $\mu$m). The lower limit of D99 is not limited to a particular value, and may be, for example, 10 $\mu$m or more (10 $\mu$m ≤ D99).

D100 of the flake-like substrate of the present embodiment is preferably 32 $\mu$m or less (D100 ≤ 32 $\mu$m). The lower limit of D100 is not limited to a particular value, and may be, for example, 18 $\mu$m or more (18 $\mu$m ≤ D100).

The values of D10, D50, D90, D99, and D100 in the particle size distribution of the flake-like substrate of the present embodiment are measured in the state where the flake-like substrate is dispersed in water.

Glass flakes can be suitably used as the flake-like substrate of the present embodiment. The composition of the glass flakes may be any commonly known glass composition. Specifically, glass with a low alkali metal oxide content, such as E glass, can be suitably used, and examples of such glass include glass in which the total content of $Na_2O$ and $K_2O$ is 2% or less in terms of mass. A typical composition of E glass is shown below. The unit of numerical values in the following composition is mass%.

$$52 \leq SiO_2 \leq 56$$

$$12 \leq Al_2O_3 \leq 16$$

$$16 \leq CaO \leq 25$$

$$0 \leq MgO \leq 6$$

$$0 \leq (Na_2O + K_2O) \leq 2 \ (\text{preferably } 0 \leq (Na_2O + K_2O) \leq 0.8)$$

$$5 \leq B_2O_3 \leq 13$$

$$0 \leq F_2 \leq 0.5$$

Alternatively, as another glass with a low alkali metal oxide content, it is also possible to use glass having a glass composition containing the following components with the unit of numerical values being mass%, and substantially free of $B_2O_3$, F, ZnO, BaO, SrO, and $ZrO_2$:

$$59 \leq SiO_2 \leq 65;$$

$$8 \leq Al_2O_3 \leq 15;$$

$$47 \leq (SiO_2\text{-}Al_2O_3) \leq 57;$$

$$1 \leq MgO \leq 5;$$

$$20 \leq CaO \leq 30;$$

$$0 < (Li_2O + Na_2O + K_2O) < 2;$$

and

$$0 \leq TiO_2 \leq 5.$$

This glass composition is disclosed by the applicant of the present application in WO 2006/068255 A1. Glass having such a glass composition is hereinafter referred to as "TA-1 glass". Being "substantially free" means that components of interest are not contained intentionally except for those inevitably introduced from, for example, industrial raw materials. Specifically, being substantially free of $B_2O_3$, **F,** ZnO, BaO, SrO, and $ZrO_2$ means that the content of each of them is less than 0.1 mass % (preferably less than 0.05 mass % and more preferably less than 0.03 mass %).

Further, as still another glass, it is also possible to use glass having a glass composition containing the following components with the unit of numerical values being mass%:

$$60 \leq SiO_2 \leq 75;$$

$$5 < Al_2O_3 \leq 15;$$

$$3 \leq CaO \leq 20;$$

$$6 \leq Na_2O \leq 20;$$

$$9 \leq (Li_2O + Na_2O + K_2O) \leq 20.$$

This glass composition is disclosed by the applicant of the present application in WO 2010/024283 A1. Glass having such a glass composition is hereinafter referred to as "TA-2 glass".

The composition of glass flakes is not limited to the glass compositions of E glass, TA-1 glass, and TA-2 glass shown above. For example, glass compositions of C glass, A glass, ECR glass, and S glass also can be used. Further, it is also possible to use glass compositions of low-dielectric glass disclosed by the applicant of the present application (see Japanese Patent No. 6505950, Japanese Patent No. 6775159, WO 2020/255396 A1, WO 2020/256142 A1, WO 2020/256143 A1, and WO 2021/049581 A1, for example).

The glass flakes of the present embodiment can be produced by, for example, a so-called blowing method such as those disclosed in JP S41(1966)-17148 B and JP S45(1970)-3541 B or a so-called rotary method such as those disclosed in JP S59(1984)-21533 A and JP H2(1990)-503669 A.

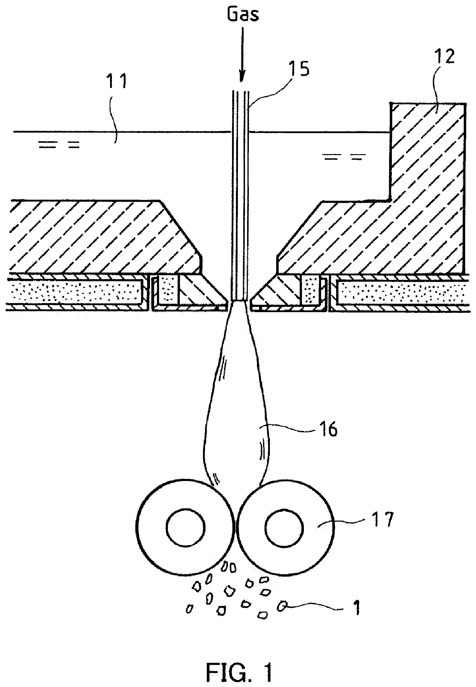

In the blowing method, the glass production apparatus shown in FIG. 1 can be used. This glass production apparatus includes a fire-resistant furnace tank 12, a blowing nozzle 15, and pressure rolls 17. A glass raw material 11 melted in the fire-resistant furnace tank 12 (melting tank) is inflated with gas blown through the blowing nozzle 15 so as to form a balloon shape, whereby a hollow glass film 16 is formed. The hollow glass film 16 is pulverized by the pressure rolls 17 to give glass flakes 1. The thickness of the glass flakes 1 can be controlled by adjusting, for example, the tensile rate of the hollow glass film 16 and the flow rate of the gas delivered through the blowing nozzle 15.

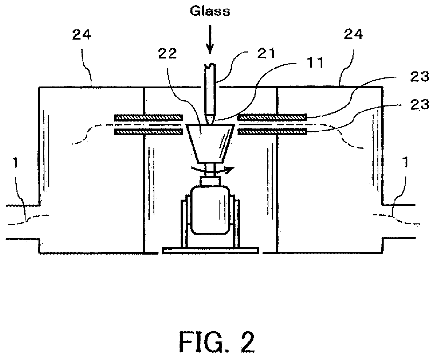

In the rotary method, the glass production apparatus shown in FIG. 2 can be used. This glass production apparatus includes a pipe 21, a rotary cup 22, a pair of annular plates 23, and an annular cyclone type collector 24. A molten glass raw material 11 is poured into the rotary cup 22 via the pipe 21, caused to flow out radially from the upper edge of the rotary cup 22 by centrifugal force, and then drawn by airflow into the annular cyclone collector 24 through the gap between the annular plates 23. While passing through the gap between the annular plates 23, the glass is cooled and solidified into a thin film, which is further pulverized into fine pieces to give glass flakes 1. The thickness of the glass flakes 1 can be controlled by adjusting, for example, the distance between the annular plates 23 and the speed of the airflow.

The flake-like substrate of the present embodiment enables the formation of resin molded articles having improved impact resistance even if the surface of the flake-like substrate is not at all coated with a surface treatment agent.

However, the surface of the flake-like substrate of the present embodiment may be at least partially coated with a surface treatment agent. The surface treatment agent contains at least one selected from the group consisting of a binder component and a silane coupling agent.

The binder component contained in the surface treatment agent is not limited to particular binder components, and any known binder components used for surface treatments of flake-like substrates can be used as appropriate. Examples of organic binder components include methylcellulose, carboxymethyl cellulose, starches, carboxymethyl starch, hydroxyethyl cellulose, hydroxypropyl cellulose, polyvinyl alcohols, acrylic resins, epoxy resins, epoxy-modified polyolefin resins, phenol resins, vinyl acetate, and urethane resins. Examples of inorganic binder components include water glass, colloidal silica, and colloidal alumina.

For example, when an epoxy-modified polyolefin resin is used as the binder component, the epoxy-modified polyolefin resin is preferably a polyolefin-glycidyl methacrylate copolymer, polyolefin-allyl glycidyl ether copolymer, and/or copolymer composed of a polyolefin on which glycidyl methacrylate or allyl glycidyl ether has been grafted under action of an organic peroxide. Ethylene-glycidyl methacrylate copolymers containing ethylene and glycidyl methacrylate as essential components (in particular, an ethylene-glycidyl methacrylate graft copolymer) are suitably used as the epoxy-modified polyolefin resin. However, the epoxy-modified polyolefin resin is not limited thereto, and examples thereof further include an ethylene-vinyl acetate-glycidyl methacrylate copolymer, ethylene-acrylic acid methyl ester-glycidyl methacrylate copolymer, ethylene-acrylic acid ethyl ester-glycidyl methacrylate copolymer, ethylene-butyl acrylate ester-glycidyl methacrylate copolymer, ethylene-acrylic acid-acrylic ester-glycidyl methacrylate copolymer, ethylene-methacrylic ester-glycidyl methacrylate copolymer, ethylene-methacrylic acid-methacrylic ester copolymer-glycidyl methacrylate copolymer, ethylene-polypropylene copolymer-glycidyl methacrylate graft copolymer, and ethylene-vinyl acetate copolymer-glycidyl methacrylate graft copolymer, and in addition, a polypropylene-glycidyl methacrylate copolymer and polypropylene-glycidyl methacrylate graft copolymer.

Further, when a resin having a glycidyl group, which is a so-called epoxy resin, is used as the binder component, examples of the epoxy resin include bisphenol A epoxy resins, phenol novolac epoxy resins, O-cresol novolac epoxy resins, bisphenol F epoxy resins, biphenyl epoxy resins, alicyclic epoxy resins, and hydrogenated bisphenol A epoxy resins. One type of epoxy resin may be used alone, or two or more types of epoxy resins may be used in combination.

Examples of the silane coupling agent include γ-aminopropyltriethoxysilane, γ-aminopropyltrimethoxysilane, γ-ureidopropyltriethoxysilane, γ-glycidoxypropyltrimethoxysilane, vinyltriethoxysilane, and γ-methacryloxypropyltrimethoxysilane. Of these, γ-aminopropyltriethoxysilane, γ-aminopropyltrimethoxysilane, and γ-ureidopropyltriethoxysilane are suitably used. Not only the silane coupling agent but also a titanium coupling agent, aluminum coupling agent, zirconia coupling agent, or the like can be used.

In addition to the above-described binder component and silane coupling agent, the surface treatment agent may contain one or more other components, when necessary. The surface treatment agent may further contain a crosslinking agent.

In addition to the above-described components, the surface treatment agent may further contain one or more other components, such as a urethane resin, a surfactant, and/or an antifoaming agent, when necessary.

The method for coating the surface of the flake-like substrate with the surface treatment agent is not limited to particular methods, and any known method can be used. For example, the flake-like substrate whose surface is at least partially coated with the surface treatment agent can be formed by adding a solution of the surface treatment agent to the flake-like substrate, stirring them, and then drying the flake-like substrate. A specific method for performing the addition of the solution of the surface treatment agent, stirring, and drying is not limited to particular methods, and exemplary methods will be described below.

For example, the flake-like substrate is caused to flow in a mixer such as a rotary disk mixer or a Henschel mixer having a mixing vessel equipped with a rotating blade, a predetermined amount of a binder is added to the flowing flake-like substrate using a means such as a spray, and the flake-like substrate and the binder are mixed and stirred. Next, the flake-like substrate is dried while being stirred in the mixer, or alternatively, the flake-like substrate is taken out of the mixer and dried. In this manner, the flake-like substrate coated with the surface treatment agent can be obtained.

As another exemplary method, tumbling granulation as disclosed in JP H02(1990)-124732 A also can be used to produce the flake-like substrate. Specifically, granulation may be performed by placing the flake-like substrate in a horizontal oscillating granulator equipped with a stirring blade and spraying a solution of the surface treatment agent onto the flake-like substrate.

The flake-like substrate also can be produced using known methods other than the above-described exemplary methods, such as methods generally called stirring granulation, fluidized bed granulation, injection granulation, and rotary granulation.

The drying step is performed by, for example, heating the flake-like substrate to a temperature equal to or higher than the boiling point of the solvent used in the surface treatment agent solution and drying the flake-like substrate until the solvent fully evaporates.

The proportion of the surface treatment agent in the flake-like substrate can be controlled by, for example, adjusting the concentration of the surface treatment agent in the surface treatment agent solution to be added or sprayed. That is, the flake-like substrate having a predetermined proportion of a coating formed of the surface treatment agent can be obtained by adding or spraying a predetermined amount of the surface treatment agent solution onto a predetermined amount of the flake-like substrate so as to provide a predetermined amount of the surface treatment agent.

In the flake-like substrate of the present embodiment, the proportion of the coating formed of the surface treatment agent is, for example, 0.05 to 2 mass%, desirably 0.2 to 1.5 mass%, and more desirably 0.3 to 1 mass%. If the proportion of the coating is 0.05 mass% or more, the flake-like substrate can be sufficiently coated with the surface treatment agent, and a decrease in the strength of the resulting resin molded article due to insufficient coating is inhibited. If the proportion of the coating is 2 mass% or less, problems caused by gas generated during extrusion molding, such as fouling of the mold or discoloration of the resulting resin molded article, are inhibited. Further, if the content of the coating is 2 mass% or less, the following problem is less likely to occur: the binding force between flakes constituting the flake-like substrate becomes too strong and insufficient kneading during resin molding may cause the flake-like substrate to remain as aggregates in the resulting resin molded article, thus leading to a decrease in the strength of the resin molded article. Still further, if the proportion of the coating is 2 mass% or less, the following problem is prevented from occurring: the components of an excessive coating hinder the adhesion between the substrate and the matrix resin, thereby causing a failure to impart favorable properties to the resulting molded article.

Resin Composition

Next, a resin composition according to the present embodiment will be described. The resin composition of the present embodiment contains the above-described flake-like substrate of the present embodiment and a matrix resin. The flake-like substrate contained in the resin composition of the present embodiment has an average particle size of 0.1 to 11 $\mu$m and an average thickness of 0.1 to 1.0 $\mu$m, and satisfies D99 ≤ 35 $\mu$m, D100 ≤ 45 $\mu$m, 3 < D90/D10, and (D90 × D99 × D100)/D50 ≤ 3200. Since the resin composition of the present embodiment contains as a filler the flake-like substrate of the present embodiment having the above-described characteristics, resin molded articles with improved impact resistance can be obtained using the resin composition. Further, the resin composition of the present embodiment, which contains as a filler the flake-like substrate of the present embodiment with the above-described characteristics, can also improve the appearance and surface smoothness of resin molded articles to be obtained using the resin composition.

The values of D10, D50, D90, D99, and D100 in the particle size distribution of the flake-like substrate contained in the resin composition of the present embodiment fall within the same numerical ranges as the values of D10, D50, D90, D99, and D100 in the particle size distribution of the above-described flake-like substrate of the present embodiment. It is to be noted, however, that the particle size distribution of the flake-like substrate may be affected by dispersion thereof in the resin composition, more specifically, may be affected by extrusion molding for obtaining the resin composition containing the flake-like substrate and/or injection molding for molding the resin composition into a resin molded article. That is, the particle size distribution of the flake-like substrate in the resin composition is not always the same as the particle size distribution of the flake-like substrate before being dispersed in the resin composition. However, from the viewpoint of further improving the impact strength, it is desirable that the particle size distribution of the flake-like substrate in the resin composition also satisfy the conditions described above for the flake-like substrate.

For example, the upper limit of the flake-like substrate contained in the resin composition of the present embodiment may be 2800 ((D90 × D99 × D100)/D50 ≤ 2800). Likewise, the flake-like substrate contained in the resin composition may have a particle size distribution in which 300 ≤ (D90 × D99 × D100)/D50 and further D90/D10 ≤ 13 are satisfied.

The values of D10, D50, D90, D99, and D100 in the particle size distribution of the flake-like substrate contained in the resin composition of the present embodiment are values measured after heating the resin composition in an atmosphere of 625°C to remove components other than the flake-like substrate and then dispersing the thus-extracted flake-like substrate in water.

The matrix resin may be, for example, a thermoplastic resin. The thermoplastic resin may be at least one selected from the group consisting of polypropylene, polyethylene, polybutylene terephthalate, polyethylene terephthalate, polycarbonate, polystyrene resins, styrene-acrylonitrile copolymer resins, polyacrylate, styrene-butadiene-acrylonitrile copolymer resins, polyarylene sulfide, polyphenylene sulfide, polyacetal, polyamide, polyamide-imide, liquid crystal polymers, polyetheretherketone, and polyetherimide. The above-described flake-like substrate of the present embodiment can achieve a high reinforcing effect on a resin molded article especially when a polyolefin is used as the matrix resin, and can achieve an even higher reinforcing effect especially when, among polyolefins, polypropylene is used as the matrix resin. In particular, when the polyolefin used is polypropylene, the flake-like substrate of the present embodiment can achieve an even higher reinforcing effect. Also, the above-described flake-like substrate of the present embodiment can achieve a high reinforcing effect on a resin molded article when polybutylene terephthalate or polycarbonate is used as the matrix resin.

The content of the flake-like substrate in the resin composition is preferably 3 to 70 mass%. By setting the content of the flake-like substrate to 3 mass% or more, the flake-like substrate can fully exhibit its function as a reinforcing material. On the other hand, by setting the content of the flake-like substrate to 70 mass% or less, the flake-like substrate can be dispersed uniformly in the resin composition. In order to further reduce the mold shrinkage ratio, it is more preferable to set the content of the flake-like substrate to 10 mass% or more and 50 mass% or less.

In addition to the matrix resin and the flake-like substrate, the resin composition may further contain one or more other components. Examples of other components include a thermoplastic elastomer and a filler such as carbon black. Examples of the thermoplastic elastomer include an olefin elastomer, styrene elastomer, and hydrogenated polymer elastomer. Examples of the olefin elastomer include ethylene-$\alpha$-olefin copolymer elastomers (such as an ethylene-propylene copolymer elastomer (EPR), ethylene-butene copolymer elastomer (EBR), ethylene-hexene copolymer elastomer (EHR), and ethylene-octene copolymer elastomer (EOR)) and ethylene-$\alpha$-olefin-diene terpolymer elastomers (such as an ethylene-propylene-ethylidene norbornene copolymer, ethylene-propylene-butadiene copolymer, and ethylene-propylene-isoprene copolymer). Two or more types of thermoplastic elastomers may be used in combination.

Resin molded articles produced using the resin composition of the present embodiment can have improved impact resistance owing to the reinforcing effect brought about by the flake-like substrate. In addition, they can also have an improved appearance and improved surface smoothness.

Examples

The present invention will be described in more detail with reference to examples. It is to be noted, however, that the present invention is not limited to the following examples. In the following examples, glass flakes were used as the flake-like substrate.

Glass Flakes

Processes such as shaping, pulverization, classification to adjust the particle size distribution, and a surface treatment in the production of glass flakes were performed in the following manner.

<Shaping>

Glass flakes 1 to 3 were produced using E glass, TA-1 glass, and TA-2 glass having the compositions shown in Tables 1A, 1B, and 1C, respectively, using the blowing method described above with reference to FIG. 1. Specifically, each type of glass was melted in a melting tank heated to 1200°C or higher. Air was blown into the glass through a nozzle to obtain thin glass, and this thin glass was continuously drawn out by rollers. The amount of air blown in and the number of revolutions of the rollers were adjusted to obtain a desired thickness. Thus, glass flakes 1 to 3 were obtained.

[Table 1A]

| E glass | (Unit: mass%) |
|---|---|
| $SiO_2$ | 54.7 |
| $Al_2O_3$ | 14.0 |
| CaO | 23.4 |
| MgO | 0.3 |
| $Na_2O$ | 0.4 |
| $K_2O$ | 0.2 |
| $B_2O_3$ | 5.8 |
| Other components | 1.2 |

[Table 1B]

| TA-1 glass | (Unit: mass%) |
|---|---|
| $SiO_2$ | 61.45 |

(continued)

| TA-1 glass | (Unit: mass%) |
|---|---|
| $Al_2O_3$ | 11.18 |
| $SiO_2$-$Al_2O_3$ | 50.27 |
| MgO | 3.17 |
| CaO | 22.80 |
| $Li_2O$ | 0.14 |
| $Na_2O$ | 0.30 |
| $K_2O$ | 0.45 |
| $Li_2O + Na_2O + K_2O$ | 0.89 |
| $TiO_2$ | 0.25 |
| $Fe_2O_3$ | 0.26 |

[Table 1C]

| TA-2 glass | (Unit: mass%) |
|---|---|
| $SiO_2$ | 65.67 |
| $B_2O_3$ | - |
| $Al_2O_3$ | 8.15 |
| MgO | 3.52 |
| CaO | 8.80 |
| SrO | - |
| BaO | - |
| ZnO | - |
| $Li_2O$ | - |
| $Na_2O$ | 13.18 |
| $K_2O$ | 0.68 |
| $Li_2O + Na_2O + K_2O$ | 13.86 |
| $TiO_2$ | - |
| $ZrO_2$ | - |
| $Fe_2O_3$ | - |

The average thickness and average particle size (D50) of each of the glass flakes 1 to 3 are shown in Table 2. The average thickness of the glass flakes was calculated by measuring the thickness of 100 flakes included in the glass flakes using SEM, dividing the sum of the measured values by the number of flakes used for the measurement, and rounding off the calculated value to one decimal place. The value of D50 of each of the glass flakes 1 to 3 was measured using a laser diffraction particle size distribution analyzer (MicrotracBEL Corp., model: MT3300EX, measurement mode: HRA) in the state where the glass flakes were dispersed in water.

<Pulverization>

The glass flakes 1 to 3 were pulverized using a ball mill, whereby glass flakes a to f were obtained, respectively.
The average particle size (D50) of each of the glass flakes a to f is shown in Table 2. Glass flakes do not break in the thickness direction, i.e., the vertical direction. Accordingly, the average thickness of the glass flakes did not change before and after the pulverization. The measurement of D50 for the glass flakes a to f was carried out in the same manner as that for the glass flakes 1 to 3.
Examples of the ball mill include tumbling ball mills (such as a pot mill, tube mill, and conical mill), vibration ball mills (such as a circular vibration mill, rotary vibration mill, and centrifugal mill), and planetary mills.

Although the ball mill was used for pulverization in the present example, the pulverization method is not limited thereto, and any other pulverization method may be employed regardless of whether it is a wet method or a dry method. For example, pulverization may be performed using an impact crusher, gyratory crusher, cone crusher, jaw crusher, roll crusher, cutter mill, autogenous mill, stamp mill, stone mill, mortar machine, ring mill, roller mills, jet mill, hammer mill, pin mill, rotary mill, vibration mill, planetary mill, attritor, or bead mill alone. These methods may be used in combination as appropriate.

<Classification>

The glass flakes a to f were classified, whereby glass flakes A to M were obtained, respectively. Specifically, the glass flakes A to M were obtained by sieve classification. In the present specification, the amount of decrease in the total mass of glass flakes due to classification relative to the total mass of the glass flakes before the classification is defined as the cut ratio. The higher the cut ratio, the smaller the content of coarse particles (the content of glass flakes with a large particle size). Accordingly, it is basically desirable to set the cut ratio high. The cut ratio is at least 5% or more, preferably 10% or more, more preferably 15% or more, or still more preferably 30% or more. However, an excessively high cut ratio lowers the accuracy of classification, and this may result in a failure to obtain the expected effect. In addition, an excessively high cut ratio also reduces the yield, which leads to an increase in the manufacturing cost. Therefore, the cut ratio desirably falls within the range of 15% to 45%.

Sieve classification may be achieved by performing sieving two or more times instead of performing single sieving. In the present example, classification was started with the use of a coarse sieve, and the classification was continued while gradually reducing the opening size of a sieve to be used until the intended cut ratio was achieved.

For example, dry vibration sieving can be used for sieve classification. For example, glass flakes having a particle size distribution in accordance with the present embodiment can be obtained by first removing particles with a particularly large particle size (e.g., D100 and D99) using a sieve with a mesh of a predetermined size or larger and then further removing particles with a next largest particle size (e.g., D90) using a sieve with a mesh of smaller than the predetermined size, thereby lowering the content of coarse particles. The mesh sizes of sieves to be used may be selected as appropriate according to the particle size of particles before sieving and desired values of D50, D90, D99, D100, or D90/D10 of the glass flakes, for example. The removed coarse particles can be reused by subjecting them to pulverization and classification again. This can improve the final yield and also can reduce the cost.

Although sieves were used for classification in the present example, the classification method is not limited thereto. Any other classification method may be employed to achieve a desired cut ratio, regardless of whether it is a wet method or a dry method. For example, in classification utilizing a gravitational field, a classification system utilizing a horizontal flow or a vertical upward flow (wet type, hollow tube type, fluidized bed type, or multi-stage bending type) can be used. In classification utilizing an inertial force field, a linear, curved (impactor type), or inclined (louver type or Coanda effect-based) classification system can be used. In classification utilizing a centrifugal field, a natural vortex or forced vortex classification system can be used.

The cut ratio in the classification and the average particle size (D50) of the glass flakes A to M are shown in Table 2. The measurement of D50 for the glass flakes A to M was carried out in the same manner as that for the glass flakes 1 to 3.

<Surface Treatment>

As the surface treatment, the following surface treatment P or Q was employed.

(Surface Treatment P)

5 kg of glass flakes were placed in a Henschel mixer, and mixed and stirred for 15 minutes while spraying a surface treatment agent solution onto the glass flakes. The surface treatment agent solution was prepared by adding, to water used as a solvent, an emulsion of an ethylene-glycidyl methacrylate copolymer as a binder component and a hydrolyzed solution of γ-aminopropyltriethoxysilane as a silane coupling agent. Thereafter, glass flakes in an undried state were taken out from the mixer and dried in a dryer at 125°C for 8 hours. Thus, glass flakes with their surfaces at least partially coated with the surface treatment agent were obtained. The proportion of the binder component in the dried glass flakes determined by calculation was 50 mass% (50 mass% is a value inclusive of about 10% of a surfactant derived from the emulsion) and the proportion of the silane coupling agent determined by calculation was 50 mass%.

(Surface Treatment Q)

Glass flakes with their surfaces at least partially coated with a surface treatment agent were obtained in the same manner as in the surface treatment P, except that a bisphenol A epoxy resin emulsion was used as the binder component and 3-glycidoxypropyltrimethoxysilane was used as the silane coupling agent. The proportion of the binder component in the dried glass flakes determined by calculation was 85 mass% (85 mass% is a value inclusive of about 10% of a surfactant derived from the emulsion) and the proportion of the silane coupling agent determined by calculation was 15 mass%.

<Deposit Ratio of Surface Treatment Agent>

The deposit ratio of the surface treatment agent was evaluated by the Loss-on-Ignition method. In the present embodiment, the deposit ratio of the surface treatment agent refers to the proportion of the coating formed of the surface treatment agent in the glass flakes. Specifically, a proper amount of glass flakes were dried at 110°C, and then heated in an atmosphere at 625°C to remove the surface treatment agent from the surfaces of the glass flakes. The deposit ratio of the coating in the glass flakes was calculated from the difference between the mass of the glass flakes before being heated and the mass of the glass flakes after being heated.

[Table 2]

| Glass flakes | Glass composition | Average thickness (μm) | Average particle size (μm) | Glass flakes | Average particle size (μm) | Glass flakes | Cut ratio (%) | Average particle size (μm) |
|---|---|---|---|---|---|---|---|---|
| 1 | E | 0.7 | 156.6 | a | 6.7 | A | 15 | 5.1 |
| | | | | | | B | 30 | 4.3 |
| | | | | | | C | 45 | 3.9 |
| | | | | b | 12.4 | D | 15 | 11.1 |
| | | | | | | E | 30 | 10.5 |
| | | | | c | 20.6 | F | 15 | 10.2 |
| | | | | d | 58.5 | G | 15 | 44.6 |
| | | | | - | | H | 10 | 88.8 |
| | | | | | | I | 30 | 70.3 |
| 2 | TA-1 | 0.4 | 126.5 | e | 12.4 | J | 15 | 10.6 |
| | | | | | | K | 30 | 10.4 |
| 3 | TA-2 | 0.3 | 114.3 | f | 2.6 | L | 30 | 2.2 |
| | | | | | | M | 45 | 2.6 |

Examples 1 to 4 and Comparative Examples 1 to 12

Glass flakes according to Examples 1 to 4 and Comparative Examples 1 to 12 are denoted by reference signs such as alphabets in the fields entitled "Glass flakes" in Tables 3A to 3C. Reference signs A to M correspond to the glass flakes A to M in Table 2. Reference signs a to f correspond to the glass flakes a to f in Table 2. Reference sign 1 corresponds to the glass flakes 1 in Table 2. The same applies to Examples and Comparative Examples to be described below. The glass flakes H and I were obtained merely by classifying the glass flakes 1 without pulverizing the glass flakes 1. No surface treatment was applied to the glass flakes of Examples 1 to 4 and Comparative Examples 1 to 12.

Various measured values for the glass flakes of Examples 1 to 4 and Comparative Examples 1 to 12 are shown in Tables 3A to 3C.

[Table 3A]

| | Ex. 1 | Ex. 2 | Ex. 3 | Ex. 4 | Comp. Ex. 1 | Comp. Ex. 2 |
|---|---|---|---|---|---|---|
| Glass flakes | A | B | L | M | a | b |
| Glass composition | E | E | TA-2 | TA-2 | E | E |
| Average thickness of glass flakes (µm) | 0.7 | 0.7 | 0.3 | 0.3 | 0.7 | 0.7 |
| D10 value of glass flakes (µm) | 2.2 | 1.8 | 0.8 | 0.9 | 2.7 | 6.5 |
| D50 value of glass flakes (µm) | 5.1 | 4.3 | 2.2 | 2.6 | 6.7 | 12.4 |
| D90 value of glass flakes (µm) | 10.5 | 8.5 | 7.4 | 8.8 | 26.0 | 24.6 |
| D99 value of glass flakes (µm) | 20.2 | 15.6 | 15.6 | 22.0 | 88.0 | 52.3 |
| D100 value of glass flakes (µm) | 26.2 | 22.0 | 22.0 | 31.1 | 104.7 | 74.0 |
| D90/D10 of glass flakes | 4.8 | 4.7 | 9.3 | 9.8 | 9.6 | 3.8 |
| (D90*D99*D100)/D50 of glass flakes | 1090 | 678 | 1154 | 2316 | 35754 | 7678 |
| Surface treatment | – | – | – | – | – | – |
| Deposit ratio of surface treatment agent (mass%) | – | – | – | – | – | – |
| Proportion of coupling agent (mass%) | – | – | – | – | – | – |
| Proportion of binder components (mass%) | – | – | – | – | – | – |
| D10 value of glass flakes in resin composition (µm) | 1.9 | 1.8 | 0.8 | 0.9 | 1.9 | 5.5 |
| D50 value of glass flakes in resin composition (µm) | 4.8 | 4.2 | 2.4 | 2.5 | 4.9 | 10.4 |
| D90 value of glass flakes in resin composition (µm) | 10.6 | 8.9 | 8.7 | 8.9 | 13.3 | 21.4 |
| D99 value of glass flakes in resin composition (µm) | 20.2 | 17.0 | 20.2 | 24.0 | 40.4 | 40.4 |
| D100 value of glass flakes in resin composition (µm) | 26.2 | 26.2 | 31.1 | 37.0 | 52.3 | 52.3 |
| D90/D10 of glass flakes in resin composition | 5.58 | 4.94 | 10.88 | 9.89 | 7.00 | 3.89 |
| (D90*D99*D100)/D50 of glass flakes in resin composition | 1169 | 944 | 2277 | 3161 | 5735 | 4348 |
| Content of glass flakes in resin composition (mass%) | 20 | 20 | 20 | 20 | 20 | 20 |
| Properties of resin molded article | Maximum tensile strength (MPa) | 22.0 | 21.7 | 21.3 | 21.1 | 21.1 | 23.9 |
| | Maximum bending strength (MPa) | 36.4 | 35.5 | 36.0 | 36.6 | 36.1 | 40.0 |
| | Flexural modulus (MPa) | 568 | 453 | 613 | 589 | 506 | 841 |
| | Izod impact strength UN[1] (kJ/m$^2$) | 137 | 160 | 141 | 110 | 66 | 72 |
| | Appearance (reflection from flakes) | Not reflected | Not reflected | Not reflected | Not reflected | Not reflected | Not reflected |
| | Surface smoothness[2] | 8.5 | 9 | 9 | 8.5 | 8 | 6.5 |
| | Scratch resistance[3] | 8.5 | 9 | 9 | 8.5 | 8 | 6.5 |

Notes
*1: Un-notched
*2, 3: The surface smoothness and scratch resistance were evaluated on a 10-point grading scale in which 8 points or higher are considered as acceptable.

[Table 3B]

| | Comp. Ex. 3 | Comp. Ex. 4 | Comp. Ex. 5 | Comp. Ex. 6 | Comp. Ex. 7 |
|---|---|---|---|---|---|
| Glass flakes | D | c | F | d | G |
| Glass composition | E | E | E | E | E |
| Average thickness of glass flakes (μm) | 0.7 | 0.7 | 0.7 | 0.7 | 0.7 |
| D10 value of glass flakes (μm) | 6.1 | 5.5 | 4.0 | 24.9 | 19.4 |
| D50 value of glass flakes (μm) | 11.1 | 20.6 | 10.2 | 58.5 | 44.6 |
| D90 value of glass flakes (μm) | 19.9 | 89.2 | 30.4 | 149.0 | 102.9 |
| D99 value of glass flakes (μm) | 37.0 | 191.9 | 74.0 | 352.0 | 209.3 |
| D100 value of glass flakes (μm) | 52.3 | 296.0 | 104.7 | 418.6 | 296.0 |
| D90/D10 of glass flakes | 3.3 | 16.2 | 7.6 | 6.0 | 5.3 |
| (D90*D99*D100)/D50 of glass flakes | 3469 | 245960 | 23091 | 375295 | 142936 |
| Surface treatment | – | – | – | – | – |
| Deposit ratio of surface treatment agent (mass%) | – | – | – | – | – |
| Proportion of coupling agent (mass%) | – | – | – | – | – |
| Proportion of binder components (mass%) | – | – | – | – | – |
| D10 value of glass flakes in resin composition (μm) | 5.3 | 4.3 | 3.4 | 18.2 | 15.6 |
| D50 value of glass flakes in resin composition (μm) | 10.3 | 14.1 | 9.2 | 39.6 | 35.1 |
| D90 value of glass flakes in resin composition (μm) | 20.3 | 44.5 | 25.9 | 70.4 | 67.1 |
| D99 value of glass flakes in resin composition (μm) | 37.0 | 80.7 | 57.1 | 104.7 | 124.5 |
| D100 value of glass flakes in resin composition (μm) | 52.3 | 104.7 | 74.0 | 148.0 | 176.0 |
| D90/D10 of glass flakes in resin composition | 3.83 | 10.35 | 7.62 | 3.87 | 4.30 |
| (D90*D99*D100)/D50 of glass flakes in resin composition | 3814 | 26666 | 11895 | 27548 | 41889 |
| Content of glass flakes in resin composition (mass%) | 20 | 20 | 20 | 20 | 20 |
| Properties of resin molded article | Maximum tensile strength (MPa) | 23.5 | 22.3 | 22.1 | 22.9 | 23.1 |
| | Maximum bending strength (MPa) | 39.8 | 36.8 | 36.7 | 38.4 | 38.9 |
| | Flexural modulus (MPa) | 811 | 545 | 599 | 768 | 768 |
| | Izod impact strength UN[1] (kJ/m$^2$) | 70 | 64 | 78 | 34 | 35 |
| | Appearance (reflection from flakes) | Not reflected | Slightly reflected | Slightly reflected | Reflected | Reflected |
| | Surface smoothness[2] | 7 | 6 | 7 | 6 | 7 |
| | Scratch resistance[3] | 7 | 6 | 7 | 4 | 5 |

Notes
*1: Un-notched
*2, 3: The surface smoothness and scratch resistance were evaluated on a 10-point grading scale in which 8 points or higher are considered as acceptable.

[Table 3C]

| | Comp. Ex. 8 | Comp. Ex. 9 | Comp. Ex. 10 | Comp. Ex. 11 | Comp. Ex. 12 |
|---|---|---|---|---|---|
| Glass flakes | 1 | H | I | e | f |
| Glass composition | E | E | E | TA–1 | TA-2 |
| Average thickness of glass flakes (μm) | 0.7 | 0.7 | 0.7 | 0.4 | 0.3 |
| D10 value of glass flakes (μm) | 52.9 | 31.5 | 24.3 | 6.2 | 0.9 |
| D50 value of glass flakes (μm) | 156.6 | 88.8 | 70.3 | 12.4 | 2.6 |
| D90 value of glass flakes (μm) | 304.0 | 206.3 | 181.1 | 27.8 | 10.1 |
| D99 value of glass flakes (μm) | 592.0 | 497.8 | 456.5 | 74.0 | 31.1 |
| D100 value of glass flakes (μm) | 704.0 | 704.0 | 704.0 | 104.7 | 37.0 |
| D90/D10 of glass flakes | 5.7 | 6.5 | 7.5 | 4.5 | 11.2 |
| (D90*D99*D100)/D50 of glass flakes | 809052 | 814168 | 827897 | 17370 | 4470 |
| Surface treatment | – | – | – | – | – |
| Deposit ratio of surface treatment agent (mass%) | – | – | – | – | – |
| Proportion of coupling agent (mass%) | – | – | – | – | – |
| Proportion of binder components (mass%) | – | – | – | – | – |
| D10 value of glass flakes in resin composition (μm) | 20.0 | 18.9 | 16.4 | 5.9 | 0.9 |
| D50 value of glass flakes in resin composition (μm) | 45.7 | 42.8 | 37.1 | 11.7 | 2.7 |
| D90 value of glass flakes in resin composition (μm) | 84.4 | 79.0 | 70.5 | 22.8 | 10.8 |
| D99 value of glass flakes in resin composition (μm) | 148.0 | 135.7 | 135.7 | 44.0 | 31.1 |
| D100 value of glass flakes in resin composition (μm) | 209.3 | 176.0 | 176.0 | 62.2 | 37.0 |
| D90/D10 of glass flakes in resin composition | 4.22 | 4.18 | 4.30 | 3.86 | 12.00 |
| (D90*D99*D100)/D50 of glass flakes in resin composition | 57208 | 44083 | 45385 | 5333 | 4603 |
| Content of glass flakes in resin composition (mass%) | 20 | 20 | 20 | 20 | 20 |
| Properties of resin molded article | Maximum tensile strength (MPa) | 23.4 | 23.7 | 23.7 | 23.4 | 21.4 |
| | Maximum bending strength (MPa) | 40.8 | 40.8 | 40.6 | 39.3 | 36.8 |
| | Flexural modulus (MPa) | 972 | 1002 | 939 | 818 | 694 |
| | Izod impact strength UN[1] (kJ/m$^2$) | 23 | 26 | 26 | 72 | 58 |
| | Appearance (reflection from flakes) | Reflected | Reflected | Reflected | Not reflected | Not reflected |
| | Surface smoothness[2] | 2 | 4 | 6 | 7.5 | 8.5 |
| | Scratch resistance[3] | 1 | 2 | 3 | 7.5 | 8.5 |

Notes
*1: Un-notched
*2, 3: The surface smoothness and scratch resistance were evaluated on a 10-point grading scale in which 8 points or higher are considered as acceptable.

Examples 5 to 9 and Comparative Examples 13 to 20

Glass flakes according to Examples 5 to 9 and Comparative Examples 13 to 20 are denoted by reference signs such as alphabets in the fields entitled "Glass flakes" in Tables 4A to 4B. The surface treatment P was applied to the glass flakes of Examples 5 to 9 and Comparative Examples 13 to 20.

Various measured values for the glass flakes of Examples 5 to 9 and Comparative Examples 13 to 20 are shown in Tables 4A to 4B.

[Table 4A]

| | Ex. 5 | Ex. 6 | Ex. 7 | Ex. 8 | Ex. 9 | Comp. Ex. 13 | Comp. Ex. 14 |
|---|---|---|---|---|---|---|---|
| Glass flakes | A | B | C | E | L | a | b |
| Glass composition | E | E | E | E | TA-2 | E | E |
| Average thickness of glass flakes (μm) | 0.7 | 0.7 | 0.7 | 0.7 | 0.3 | 0.7 | 0.7 |
| D10 value of glass flakes (μm) | 1.6 | 1.6 | 1.5 | 5.7 | 0.8 | 2.2 | 6.5 |
| D50 value of glass flakes (μm) | 5.1 | 4.3 | 3.9 | 10.5 | 2.2 | 6.7 | 12.4 |
| D90 value of glass flakes (μm) | 11.6 | 9.7 | 8.3 | 18.8 | 7.4 | 23.0 | 24.6 |
| D99 value of glass flakes (μm) | 26.2 | 22.0 | 15.6 | 33.9 | 15.6 | 48.0 | 52.3 |
| D100 value of glass flakes (μm) | 37.0 | 31.1 | 22.0 | 44.0 | 22.0 | 52.3 | 74.0 |
| D90/D10 of glass flakes | 7.3 | 6.1 | 5.5 | 3.3 | 9.3 | 10.5 | 3.8 |
| (D90*D99*D100)/D50 of glass flakes | 2205 | 1543 | 730 | 2671 | 1154 | 8618 | 7678 |
| Surface treatment | P | P | P | P | P | P | P |
| Deposit ratio of surface treatment agent (mass%) | 0.6 | 0.6 | 0.6 | 0.6 | 0.6 | 0.6 | 0.6 |
| Proportion of coupling agent (mass%) | 50 | 50 | 50 | 50 | 50 | 50 | 50 |
| Proportion of binder components (mass%) | 50 | 50 | 50 | 50 | 50 | 50 | 50 |
| D10 value of glass flakes in resin composition (μm) | 1.7 | 1.5 | 1.5 | 5.2 | 0.9 | 1.7 | 5.8 |
| D50 value of glass flakes in resin composition (μm) | 4.5 | 3.8 | 3.7 | 10.2 | 2.4 | 4.6 | 11.8 |
| D90 value of glass flakes in resin composition (μm) | 11.0 | 9.3 | 8.6 | 18.8 | 8.6 | 13.1 | 24.0 |
| D99 value of glass flakes in resin composition (μm) | 24.0 | 20.2 | 17.0 | 33.9 | 18.5 | 31.1 | 52.3 |
| D100 value of glass flakes in resin composition (μm) | 31.1 | 26.2 | 22.0 | 44.0 | 26.2 | 44.0 | 74.0 |
| D90/D10 of glass flakes in resin composition | 6.47 | 6.20 | 5.73 | 3.62 | 9.56 | 7.71 | 4.14 |
| (D90*D99*D100)/D50 of glass flakes in resin composition | 1825 | 1295 | 869 | 2749 | 1737 | 3897 | 7872 |
| Content of glass flakes in resin composition (mass%) | 20 | 20 | 20 | 20 | 20 | 20 | 20 |
| Properties of resin molded article | Maximum tensile strength (MPa) | 23.3 | 23.4 | 23.7 | 23.7 | 23.1 | 23.5 | 23.9 |
| | Maximum bending strength (MPa) | 37.5 | 37.0 | 37.1 | 37.5 | 34.9 | 37.6 | 39.4 |
| | Flexural modulus (MPa) | 526 | 423 | 543 | 601 | 1248 | 534 | 642 |
| | Izod impact strength UN[1] (kJ/m$^2$) | 91 | 108 | 102 | 100 | 94 | 82 | 78 |
| | Appearance (reflection from flakes) | Not reflected | Not reflected | Not reflected | Not reflected | Not reflected | Not reflected | Not reflected |
| | Surface smoothness[2] | 9 | 9.5 | 9.5 | 8 | 10 | 8.5 | 7 |
| | Scratch resistance[3] | 9 | 9.5 | 9.5 | 8 | 10 | 8.5 | 7 |

Notes
*1: Un-notched
*2, 3: The surface smoothness and scratch resistance were evaluated on a 10-point grading scale in which 8 points or higher are considered as acceptable.

[Table 4B]

| | Comp. Ex. 15 | Comp. Ex. 16 | Comp. Ex. 17 | Comp. Ex. 18 | Comp. Ex. 19 | Comp. Ex. 20 |
|---|---|---|---|---|---|---|
| Glass flakes | f | d | G | 1 | H | I |
| Glass composition | TA-2 | E | E | E | E | E |
| Average thickness of glass flakes (μm) | 0.3 | 0.7 | 0.7 | 0.7 | 0.7 | 0.7 |
| D10 value of glass flakes (μm) | 0.9 | 24.9 | 19.4 | 52.9 | 31.5 | 24.3 |
| D50 value of glass flakes (μm) | 2.6 | 58.5 | 44.6 | 156.6 | 88.8 | 70.3 |
| D90 value of glass flakes (μm) | 10.1 | 149.0 | 102.9 | 304.0 | 206.3 | 181.1 |
| D99 value of glass flakes (μm) | 31.1 | 352.0 | 209.3 | 592.0 | 497.8 | 456.5 |
| D100 value of glass flakes (μm) | 37.0 | 418.6 | 296.0 | 704.0 | 704.0 | 704.0 |
| D90/D10 of glass flakes | 11.2 | 6.0 | 5.3 | 5.7 | 6.5 | 7.5 |
| (D90*D99*D100)/D50 of glass flakes | 4470 | 375295 | 142936 | 809052 | 814168 | 827897 |
| Surface treatment | P | P | P | P | P | P |
| Deposit ratio of surface treatment agent (mass%) | 0.6 | 0.6 | 0.6 | 0.6 | 0.6 | 0.6 |
| Proportion of coupling agent (mass%) | 50 | 50 | 50 | 50 | 50 | 50 |
| Proportion of binder components (mass%) | 50 | 50 | 50 | 50 | 50 | 50 |
| D10 value of glass flakes in resin composition (μm) | 0.9 | 18.7 | 16.6 | 21.6 | 19.4 | 17.6 |
| D50 value of glass flakes in resin composition (μm) | 2.6 | 41.2 | 37.4 | 47.1 | 43.6 | 39.5 |
| D90 value of glass flakes in resin composition (μm) | 9.8 | 76.4 | 70.6 | 87.6 | 81.1 | 73.6 |
| D99 value of glass flakes in resin composition (μm) | 28.5 | 148.0 | 135.7 | 176.0 | 161.4 | 135.7 |
| D100 value of glass flakes in resin composition (μm) | 37.0 | 209.3 | 176.0 | 248.9 | 248.9 | 176.0 |
| D90/D10 of glass flakes in resin composition | 10.89 | 4.09 | 4.25 | 4.06 | 4.18 | 4.18 |
| (D90*D99*D100)/D50 of glass flakes in resin composition | 3975 | 57442 | 45084 | 81474 | 74724 | 44501 |
| Content of glass flakes in resin composition (mass%) | 20 | 20 | 20 | 20 | 20 | 20 |
| Properties of resin molded article | Maximum tensile strength (MPa) | 23.1 | 27.4 | 26.9 | 29.0 | 28.4 | 28.2 |
| | Maximum bending strength (MPa) | 35.7 | 48.1 | 47.5 | 51.2 | 50.5 | 49.1 |
| | Flexural modulus (MPa) | 1306 | 2411 | 2352 | 2713 | 2647 | 2478 |
| | Izod impact strength UN[1] (kJ/m$^2$) | 74 | 37 | 37 | 34 | 34 | 37 |
| | Appearance (reflection from flakes) | Not reflected | Reflected | Reflected | Reflected | Reflected | Reflected |
| | Surface smoothness[2] | 9.5 | 6.5 | 7.5 | 2.5 | 4.5 | 6.5 |
| | Scratch resistance[3] | 9.5 | 5 | 7 | 4 | 4.5 | 5 |

Notes
*1: Un-notched
*2, 3: The surface smoothness and scratch resistance were evaluated on a 10-point grading scale in which 8 points or higher are considered as acceptable.

Examples 10 to 15 and Comparative Examples 21 to 23

Glass flakes according to Examples 10 to 15 and Comparative Examples 21 to 23 are denoted by reference signs such as alphabets in the fields entitled "Glass flakes" in Tables 5A to 5B. No surface treatment was applied to the glass flakes of Examples 10 to 12 and Comparative Example 21. The surface treatment Q was applied to the glass flakes of Examples 13 to 15 and Comparative Examples 22 to 23.
Various measured values for the glass flakes of Examples 10 to 15 and Comparative Examples 21 to 23 are shown in Tables 5A to 5B.

[Table 5A]

| | Ex. 10 | Ex. 11 | Ex. 12 | Ex. 13 | Ex. 14 | Ex. 15 |
|---|---|---|---|---|---|---|
| Glass flakes | A | B | C | A | B | C |
| Glass composition | E | E | E | E | E | E |
| Average thickness of glass flakes (μm) | 0.7 | 0.7 | 0.7 | 0.7 | 0.7 | 0.7 |
| D10 value of glass flakes (μm) | 1.6 | 1.6 | 1.5 | 1.6 | 1.6 | 1.5 |
| D50 value of glass flakes (μm) | 5.1 | 4.3 | 3.9 | 5.1 | 4.3 | 3.9 |
| D90 value of glass flakes (μm) | 11.6 | 9.7 | 8.3 | 11.6 | 9.7 | 8.3 |
| D99 value of glass flakes (μm) | 26.2 | 22.0 | 15.6 | 26.2 | 22.0 | 15.6 |
| D100 value of glass flakes (μm) | 37.0 | 31.1 | 22.0 | 37.0 | 31.1 | 22.0 |
| D90/D10 of glass flakes | 7.3 | 6.1 | 5.5 | 7.3 | 6.1 | 5.5 |
| (D90*D99*D100)/D50 of glass flakes | 2205 | 1543 | 730 | 2205 | 1543 | 730 |
| Surface treatment | – | – | – | Q | Q | Q |
| Deposit ratio of surface treatment agent (mass%) | – | – | – | 0.7 | 0.7 | 0.7 |
| Proportion of coupling agent (mass%) | – | – | – | 15 | 15 | 15 |
| Proportion of binder components (mass%) | – | – | – | 85 | 85 | 85 |
| D10 value of glass flakes in resin composition (μm) | 1.7 | 1.4 | 1.5 | 1.7 | 1.6 | 1.4 |
| D50 value of glass flakes in resin composition (μm) | 4.6 | 3.6 | 3.6 | 4.5 | 4.0 | 3.3 |
| D90 value of glass flakes in resin composition (μm) | 11.1 | 8.9 | 8.3 | 11.4 | 9.3 | 7.7 |
| D99 value of glass flakes in resin composition (μm) | 24.0 | 18.5 | 15.6 | 26.2 | 18.5 | 14.3 |
| D100 value of glass flakes in resin composition (μm) | 31.1 | 26.2 | 22.0 | 37.0 | 26.2 | 18.5 |
| D90/D10 of glass flakes in resin composition | 6.53 | 6.36 | 5.53 | 6.71 | 5.81 | 5.50 |
| (D90*D99*D100)/D50 of glass flakes in resin composition | 1801 | 1198 | 791 | 2456 | 1127 | 617 |
| Content of glass flakes in resin composition (mass%) | 30 | 30 | 30 | 30 | 30 | 30 |
| Properties of resin molded article — Maximum tensile strength (MPa) | 60.2 | 60.1 | 60.2 | 61.0 | 61.7 | 62.1 |
| Properties of resin molded article — Maximum bending strength (MPa) | 104.7 | 105.2 | 106.0 | 104.2 | 105.5 | 104.0 |
| Properties of resin molded article — Flexural modulus (MPa) | 4059 | 4084 | 4084 | 3914 | 4007 | 3981 |
| Properties of resin molded article — Izod impact strength UN[*1] ($kJ/m^2$) | 58 | 68 | 68 | 67 | 70 | 75 |

Notes
*1: Un-notched

[Table 5B]

| | Comp. Ex. 21 | Comp. Ex. 22 | Comp. Ex. 23 |
|---|---|---|---|
| Glass flakes | a | a | 1 |
| Glass composition | E | E | E |
| Average thickness of glass flakes (μm) | 0.7 | 0.7 | 0.7 |
| D10 value of glass flakes (μm) | 2.2 | 2.2 | 60.9 |
| D50 value of glass flakes (μm) | 6.7 | 6.7 | 156.6 |
| D90 value of glass flakes (μm) | 23.0 | 23.0 | 284.1 |
| D99 value of glass flakes (μm) | 48.0 | 48.0 | 418.6 |
| D100 value of glass flakes (μm) | 52.3 | 52.3 | 704.0 |
| D90/D10 of glass flakes | 10.5 | 10.5 | 4.7 |
| (D90*D99*D100)/D50 of glass flakes | 8618 | 8618 | 534628 |
| Surface treatment | – | Q | Q |
| Deposit ratio of surface treatment agent (mass%) | – | 0.7 | 0.7 |
| Proportion of coupling agent (mass%) | – | 15 | 15 |
| Proportion of binder components (mass%) | – | 85 | 85 |
| D10 value of glass flakes in resin composition (μm) | 1.8 | 2.0 | 15.9 |
| D50 value of glass flakes in resin composition (μm) | 5.4 | 5.5 | 42.4 |
| D90 value of glass flakes in resin composition (μm) | 17.9 | 18.0 | 99.1 |
| D99 value of glass flakes in resin composition (μm) | 44.0 | 44.0 | 228.2 |
| D100 value of glass flakes in resin composition (μm) | 52.3 | 52.3 | 296.0 |
| D90/D10 of glass flakes in resin composition | 9.94 | 9.00 | 6.23 |
| (D90*D99*D100)/D50 of glass flakes in resin composition | 7628 | 7531 | 157876 |
| Content of glass flakes in resin composition (mass%) | 30 | 30 | 30 |
| Properties of resin molded article | Maximum tensile strength (MPa) | 59.2 | 60.5 | 88.9 |
| | Maximum bending strength (MPa) | 104.0 | 103.8 | 156.4 |
| | Flexural modulus (MPa) | 4110 | 3927 | 9112 |
| | Izod impact strength UN[*1] (kJ/m$^2$) | 46 | 50 | 43 |

Notes
*1: Un-notched

Examples 16 to 18 and Comparative Examples 24 to 25

Glass flakes according to Examples 16 to 18 and Comparative Examples 24 to 25 are denoted by reference signs such as alphabets in the fields entitled "Glass flakes" in Table 6. The surface treatment Q was applied to the glass flakes of Examples 16 to 18 and Comparative Examples 24 to 25.

Various measured values for the glass flakes of Examples 16 to 18 and Comparative Examples 24 to 25 are shown in Table 6.

[Table 6]

| | Ex. 16 | Ex. 17 | Ex. 18 | Comp. Ex. 24 | Comp. Ex. 25 |
|---|---|---|---|---|---|
| Glass flakes | A | B | C | a | 1 |
| Glass composition | E | E | E | E | E |
| Average thickness of glass flakes (μm) | 0.7 | 0.7 | 0.7 | 0.7 | 0.7 |
| D10 value of glass flakes (μm) | 1.6 | 1.6 | 1.5 | 2.2 | 60.9 |
| D50 value of glass flakes (μm) | 5.1 | 4.3 | 3.9 | 6.7 | 156.6 |
| D90 value of glass flakes (μm) | 11.6 | 9.7 | 8.3 | 23.0 | 284 |
| D99 value of glass flakes (μm) | 26.2 | 22.0 | 15.6 | 48.0 | 419 |
| D100 value of glass flakes (μm) | 37.0 | 31.1 | 22.0 | 52.3 | 704 |
| D90/D10 of glass flakes | 7.3 | 6.1 | 5.5 | 10.5 | 4.7 |
| (D90*D99*D100)/D50 of glass flakes | 2205 | 1543 | 730 | 8618 | 534950 |
| Surface treatment | Q | Q | Q | Q | Q |
| Deposit ratio of surface treatment agent (mass%) | 0.7 | 0.7 | 0.7 | 0.7 | 0.7 |
| Proportion of coupling agent (mass%) | 15 | 15 | 15 | 15 | 15 |
| Proportion of binder components (mass%) | 85 | 85 | 85 | 85 | 85 |
| D10 value of glass flakes in resin composition (μm) | 1.6 | 1.6 | 1.4 | 2.1 | 14.2 |
| D50 value of glass flakes in resin composition (μm) | 4.5 | 4.0 | 3.6 | 5.9 | 34.8 |
| D90 value of glass flakes in resin composition (μm) | 11.5 | 9.3 | 8.6 | 19.0 | 87.6 |
| D99 value of glass flakes in resin composition (μm) | 26.2 | 18.5 | 18.5 | 40.4 | 209.3 |
| D100 value of glass flakes in resin composition (μm) | 37.0 | 26.2 | 26.2 | 52.3 | 296.0 |
| D90/D10 of glass flakes in resin composition | 7.19 | 5.81 | 6.14 | 9.05 | 6.17 |
| (D90*D99*D100)/D50 of glass flakes in resin composition | 2477 | 1127 | 1158 | 6804 | 155950 |
| Content of glass flakes in resin composition (mass%) | 30 | 30 | 30 | 30 | 30 |
| Properties of resin molded article — Maximum tensile strength (MPa) | 70.0 | 68.8 | 69.0 | 68.3 | 88.4 |
| Properties of resin molded article — Maximum bending strength (MPa) | 99.9 | 87.2 | 104.0 | 102.4 | 149.8 |
| Properties of resin molded article — Flexural modulus (MPa) | 3888 | 3872 | 3826 | 3951 | 6477 |
| Properties of resin molded article — Izod impact strength UN[1] (kJ/m$^2$) | 81 | 85 | 86 | 49 | 38 |

Notes
*1: Un-notched

Resin Molded Article

Resin molded articles of Examples 1 to 9 and Comparative Examples 1 to 20 were each obtained through molding in the following manner. Glass flakes, polypropylene (Japan Polypropylene Corporation, NOVATEC BC06C), a thermoplastic elastomer (ethylene-octene copolymer elastomer, The Dow Chemical Company, ENGAGE 8200), and carbon black fine powder were mixed together uniformly such that their contents became 20 mass%, 58 mass%, 20 mass%, and 2 mass%, respectively. The resulting mixture was kneaded in an extrusion molding machine (Technovel Corporation, KZW15-30MG, molding temperature: about 210°C to 220°C). In this manner, a resin composition containing the polypropylene as a matrix resin and the glass flakes as a reinforcing filler was obtained. This resin composition was molded using an injection molding machine (Nissei Plastic Industrial Co., Ltd., HM7), whereby a resin molded article was obtained. The content of the glass flakes in the resulting resin molded article (i.e., in the resin composition) was 20 mass%.

Resin molded articles of Examples 10 to 15 and Comparative Examples 21 to 23 were each obtained in the same manner as in Examples 1 to 9 and Comparative Examples 1 to 20, except that polybutylene terephthalate (Polyplastics Co., Ltd., DURANEX 2000) was used instead of the polypropylene. The content of the glass flakes in the resulting resin molded article (i.e., in the resin composition) was 30 mass%.

Resin molded articles of Examples 16 to 18 and Comparative Examples 24 to 25 were each obtained in the same manner as in Examples 1 to 9 and Comparative Examples 1 to 20, except that polycarbonate (Mitsubishi Engineering-Plastics Corporation, Iupilon S3000F) was used instead of the polypropylene. The content of the glass flakes in the resulting resin molded article (i.e., in the resin composition) was 30 mass%.

<Calculation of Content of Glass Flakes in Resin Composition>

The content of glass flakes in each resin composition was evaluated by the Loss-on-Ignition method. Specifically, a proper amount of the resin molded article was heated in an atmosphere at 625°C to remove components other than the glass flakes, and the content of the glass flakes in the resin composition was calculated from the difference between the mass of the resin molded article before being heated and the mass of the residue (glass flakes) remaining after the heating.

<Measurement of Particle Size Distribution by Laser Diffraction/Scattering Method>

The measurement of the particle size distribution by the laser diffraction/scattering method was performed with respect to the glass flakes generated as the residue in the process for calculating the content of the glass flakes in the resin composition. Specifically, each type of glass flakes were dispersed in water and the particle size distribution was measured using a laser diffraction particle size distribution analyzer (MicrotracBEL Corp., model: MT3300EX, measurement mode: HRA). The values of D10, D50, D90, D99, and D100 of the glass flakes in the resin composition were read from the measurement result. Further, based on these values, D90/D10 and (D90 × D99 × D100)/D50 of the glass flakes in the resin composition were calculated. In the particle size distribution, D10 is defined as a particle size at which a cumulative volume fraction from a smaller-particle side reaches 10%, D50 is defined as a particle size at which the cumulative volume fraction from the smaller-particle side reaches 50%, D90 is defined as a particle size at which the cumulative volume fraction from the smaller-particle side reaches 90%, D99 is defined as a particle size at which the cumulative volume fraction from the smaller-particle side reaches 99%, and D100 is defined as a particle size at which the cumulative volume fraction from the smaller-particle side reaches 100%. The results are shown in Tables 3A to 6.

<Measurement of Properties of Resin Molded Article>

The maximum tensile strength of each resin molded article was measured according to JIS K 7113. The maximum bending strength and flexural modulus of the same were measured according to JIS K 7171. The Izod impact strength UN (un-notched) of the same was measured according to JIS K 7110. In evaluation of the appearance of the resin molded article, a 30 mm square (3 mm thick) flat plate was formed, and the presence or absence of reflection from the glass flakes on the surface of the resin molded article was inspected under natural solar light. In evaluation of surface smoothness, the resin molded article was observed under an optical microscope at a magnification of 20×, and the smoothness of the surface of the resin molded article was comparatively evaluated on a 10-point grading scale in which 8 points or higher are considered as acceptable. In evaluation of scratch resistance, a scratch hardness tester (Erichsen GmbH & Co. KG, pencil scratch hardness tester: model 318, tip diameter: 0.75 mm) was dragged on the above-described flat plate used for the appearance evaluation at a speed of 1 cm per second while applying a constant load (1 to 10 N) vertically to the flat plate, and the scratch (the degree of whitening) caused at this time was comparatively evaluated on a 10-point grading scale in which 8 points or higher are considered as acceptable. The results are shown in Tables 3A to 6. Evaluations on the appearance, surface smoothness, and scratch resistance were not made or could not be made for Examples 10 to 15 and Comparative Examples 21 to 23 and Examples 16 to 18 and Comparative Examples 24 to 25. For example, in the glass flakes A, B, C, and a of Examples 16 to 18 and Comparative Example 24 before being subjected to the surface treatment, resin decomposition was caused by alkali components present in the glass during molding to obtain resin molded articles. As a result, evaluation data on the appearance, surface smoothness, and scratch resistance of the resin molded articles could not be obtained.

As can be seen in Tables 3A to 6, regardless of whether or not the glass flakes were surface-treated, the impact resistance, appearance, surface smoothness, and scratch resistance of the resin molded articles of Examples were improved as compared with those of the resin molded articles of Comparative Examples. That is, the use of the glass flakes with a small particle size satisfying the parameters regarding the particle size characteristics as defined in the present embodiment could improve the impact resistance, appearance, surface smoothness, and scratch resistance of the resin molded articles in which a thermoplastic resin such as a polypropylene resin is used as the matrix resin.

With reference to comparison between Example 8 and Comparative Example 13, it was found that Example 8, in which the values of D90, D99, and D100 were the same as or slightly larger than those in Comparative Example 13 and the value of (D90 × D99 × D100)/D50 was smaller than that in Comparative Example 13, achieved higher impact strength than Comparative Example 13.

Although not shown in Tables 3A to 6, the resin molded articles of Examples exhibited favorable values for the Izod impact strength N (notched) measured according to JIS K 7110. For example, the resin molded articles of Examples 2 and 3 exhibited an Izod impact strength N (notched) of 10.0 or more.

Although glass flakes were used as the flake-like substrate in Examples described above, it is expected that materials other than glass flakes, such as, for example, mica and talc, also can bring about similar effects.

INDUSTRIAL APPLICABILITY

The flake-like substrate of the present invention can effectively improve the impact resistance, appearance, surface smoothness, and scratch resistance of resin compositions and thus is applicable to a wide variety of applications. For example, resin compositions containing the flake-like substrate of the present invention and a thermoplastic resin are suitable for use in the fields where an emphasis has conventionally been placed on the appearance and surface smoothness, and although the impact resistance is considered important, the use of fibrous fillers is not acceptable. Examples of such fields include fields pertaining to the interior and exterior of automobiles and electronic components. More specifically, such resin compositions are applicable to parts of automobiles in which polypropylene or the like is used, e.g., exterior parts such as a bumper or interior parts such as an instrument panel.

**Claims**

1. A flake-like substrate having an average particle size of 0.1 to 11 $\mu$m and an average thickness of 0.1 to 1.0 $\mu$m, wherein

    the flake-like substrate has a particle size distribution in which the following is satisfied:

$$D99 \leq 35 \ \mu m;$$

$$D100 \leq 45 \ \mu m;$$

$$3 < D90/D10;$$

    and

$$(D90 \times D99 \times D100)/D50 \leq 3200,$$

    where D10 is a particle size at which a cumulative volume fraction from a smaller-particle side reaches 10%, D50 is a particle size at which the cumulative volume fraction from the smaller-particle side reaches 50%, D90 is a particle size at which the cumulative volume fraction from the smaller-particle side reaches 90%, D99 is a particle size at which the cumulative volume fraction from the smaller-particle side reaches 99%, and D100 is a particle size at which the cumulative volume fraction from the smaller-particle side reaches 100%, and (D90 × D99 × D100)/D50 is calculated using $\mu$m as the unit of D50, D90, D99 and D100.

2. The flake-like substrate according to claim 1, wherein the flake-like substrate is composed of at least one selected from the group consisting of glass, mica, and talc.

3. The flake-like substrate according to claim 1 or 2, wherein

$$300 \leq (D90 \times D99 \times D100)/D50$$

is satisfied.

4. The flake-like substrate according to any one of claims 1 to 3, wherein

$$D90/D10 \leq 13$$

is satisfied.

5. The flake-like substrate according to any one of claims 1 to 4, wherein
a surface of the flake-like substrate is at least partially coated with a surface treatment agent.

6. The flake-like substrate according to claim 5, wherein
the surface treatment agent includes at least one selected from the group consisting of a binder component and a silane coupling agent.

7. The flake-like substrate according to claim 5 or 6, wherein
a content of the surface treatment agent in the flake-like substrate is from 0.05 to 2 mass%.

8. A resin composition comprising:

a flake-like substrate; and
a matrix resin,
wherein the flake-like substrate contained in the resin composition has an average particle size of 0.1 to 11 $\mu$m and an average thickness of 0.1 to 1.0 $\mu$m, and has a particle size distribution in which the following is satisfied:

$$D99 \leq 35 \ \mu m;$$

$$D100 \leq 45 \ \mu m;$$

$$3 < D90/D10;$$

and

$$(D90 \times D99 \times D100)/D50 \leq 3200,$$

where D10 is a particle size at which a cumulative volume fraction from a smaller-particle side reaches 10%, D50 is a particle size at which the cumulative volume fraction from the smaller-particle side reaches 50%, D90 is a particle size at which the cumulative volume fraction from the smaller-particle side reaches 90%, D99 is a particle size at which the cumulative volume fraction from the smaller-particle side reaches 99%, and D100 is a particle size at which the cumulative volume fraction from the smaller-particle side reaches 100%, and (D90 $\times$ D99 $\times$ D100)/D50 is calculated using $\mu$m as the unit of D50, D90, D99 and D100.

9. The resin composition according to claim 8, wherein
the flake-like substrate contained in the resin composition satisfies $300 \leq$ (D90 $\times$ D99 $\times$ D100)/D50.

10. The resin composition according to claim 8 or 9, wherein
the flake-like substrate contained in the resin composition satisfies D90/D10 $\leq$ 13.

11. The resin composition according to any one of claims 8 to 10, wherein
the matrix resin is a thermoplastic resin.

12. The resin composition according to claim 11, wherein
the thermoplastic resin is at least one selected from the group consisting of polypropylene, polyethylene, polybutylene terephthalate, polyethylene terephthalate, polycarbonate, polystyrene resins, styrene-acrylonitrile copolymer resins, polyacrylate, styrene-butadiene-acrylonitrile copolymer resins, polyarylene sulfide, polyphenylene sulfide, polyacetal, polyamide, polyamide-imide, liquid crystal polymers, polyetheretherketone, and polyetherimide.

13. The resin composition according to claim 12, wherein the thermoplastic resin is polypropylene.

14. The resin composition according to claim 12, wherein the thermoplastic resin is polycarbonate.

FIG. 1

FIG. 2

## INTERNATIONAL SEARCH REPORT

International application No.

**PCT/JP2023/004467**

### A. CLASSIFICATION OF SUBJECT MATTER

*C03B 37/005*(2006.01)i; *C01B 33/12*(2006.01)i; *C03C 17/28*(2006.01)i; *C03C 17/32*(2006.01)i; *C08K 3/013*(2018.01)i; *C08K 3/34*(2006.01)i; *C08K 7/00*(2006.01)i; *C08L 101/00*(2006.01)i

FI: C03B37/005; C03C17/28 Z; C03C17/32 Z; C01B33/12 Z; C08K3/013; C08K3/34; C08L101/00; C08K7/00

According to International Patent Classification (IPC) or to both national classification and IPC

### B. FIELDS SEARCHED

Minimum documentation searched (classification system followed by classification symbols)

C03B37/005; C01B33/12; C03C1/00-23/00; C08K3/00-13/08; C08L1/00-101/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2018/221313 A1 (NIPPON SHEET GLASS CO., LTD.) 06 December 2018 (2018-12-06) paragraphs [0025]-[0037], [0039], [0053]-[0055], table 3, example 6 | 1-2, 4-8, 10-14 |
| Y | | 5-7, 11-14 |
| X | JP 2016-175819 A (NIHON YAMAMURA GLASS CO., LTD.) 06 October 2016 (2016-10-06) paragraphs [0029], [0036]-[0050], table 3, example 1, fig. 3 | 1-4, 8-10 |
| Y | | 5-7, 11-14 |
| A | WO 2007/114442 A1 (NIPPON SHEET GLASS CO., LTD.) 11 October 2007 (2007-10-11) entire text | 1-14 |
| A | JP 2018-138634 A (MITSUBISHI CHEMICAL CORP.) 06 September 2018 (2018-09-06) entire text | 1-14 |
| A | JP 2020-200445 A (CHANG CHUN PLASTICS CO., LTD.) 17 December 2020 (2020-12-17) entire text | 1-14 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 April 2023** | **25 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2023/004467**

| C. | DOCUMENTS CONSIDERED TO BE RELEVANT | |
|---|---|---|
| Category* | Citation of document, with indication, where appropriate, of the relevant passages | Relevant to claim No. |
| A | JP 2004-315835 A (MITSUI MINING & SMELTING CO., LTD.) 11 November 2004 (2004-11-11) entire text | 1-14 |

Form PCT/ISA/210 (second sheet) (January 2015)

EP 4 491 591 A1

**INTERNATIONAL SEARCH REPORT**
Information on patent family members

International application No.

**PCT/JP2023/004467**

| Patent document cited in search report | | | Publication date (day/month/year) | Patent family member(s) | | | Publication date (day/month/year) |
|---|---|---|---|---|---|---|---|
| WO | 2018/221313 | A1 | 06 December 2018 | US 2020/0055767 A1 paragraphs [0041]-[0053], [0055], [0069], [0070], table 3, example 6 | | | |
| | | | | EP | 3632860 | A1 | |
| | | | | CN | 110678424 | A | |
| JP | 2016-175819 | A | 06 October 2016 | (Family: none) | | | |
| WO | 2007/114442 | A1 | 11 October 2007 | US 2009/0274735 A1 entire text | | | |
| | | | | EP | 2009066 | A1 | |
| | | | | CN | 101415783 | A | |
| | | | | KR | 10-2009-0009819 | A | |
| JP | 2018-138634 | A | 06 September 2018 | (Family: none) | | | |
| JP | 2020-200445 | A | 17 December 2020 | CN | 111909486 | A | |
| | | | | KR | 10-2020-0130056 | A | |
| JP | 2004-315835 | A | 11 November 2004 | (Family: none) | | | |

Form PCT/ISA/210 (patent family annex) (January 2015)

# EP 4 491 591 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2018221313 A1
- JP 4652445 B
- WO 2006068255 A1
- WO 2010024283 A1
- JP 6505950 B
- JP 6775159 B
- WO 2020255396 A1
- WO 2020256142 A1

- WO 2020256143 A1
- WO 2021049581 A1
- JP S41196617148 B
- JP S4519703541 B
- JP S59198421533 A
- JP H21990503669 A
- JP H021990124732 A